# EUROPÄISCHE PATENTANMELDUNG

(11) **EP 1 093 868 A1**
(43) Veröffentlichungstag der Anmeldung: **25.04.2001**
(21) Anmeldenummer: 00250335.7
(22) Anmeldetag: 13.10.2000
(51) Int. Cl.: B21D 53/04, B23P 15/26, F25B 39/00

(54) **Verfahren zur Herstellung eines Verdampfers/Kondensators**

(30) Priorität: 19.10.1999 AT 176199
(71) Anmelder: Joh. Vaillant GmbH u. Co., 42850 Remscheid (DE)
(72) Erfinder: Lang, Rainer, 51067 Koln (DE); Roth, Manfred, 52076 Aachen (DE); Stricker, Marc, 52064 Aachen (DE); Dawoud, Belal, 52070 Aachen (DE)
(74) Vertreter: Heim, Johann-Ludwig

(57) **Zusammenfassung**

Verfahren zur Herstellung eines Verdampfer/Kondensators, insbesondere für eine Sorptionswärmepumpe. Um eine einfache Herstellung zu ermöglichen, ist vorgesehen, daß zwei Blechplatten (21, 22) entlang eines vorgegebenen Weges mit einer dichten Doppelnaht (20) miteinander verschweißt und der zwischen der Doppelnaht (20) verbleibende Raum mit Anschlüssen versehen wird, wonach der zwischen der Doppelnaht (20) verbleibende Raum mit Druckluft aufgeweitet wird.

## Beschreibung

Die Erfindung bezieht sich auf ein Verfahren gemäß dem Oberbegriff des Anspruches 1.

Sorptionswärmepumpen aller Art können zur Beheizung von Gebäuden sowie zur Warmwasserbereitung eingesetzt werden. Sie zeichnen sich durch eine besonders gute Effizienz aus, da sie mit Hilfe eines thermodynamischen Kreisprozesses Umgebungswärme auf ein für Heiz- und Warmwasserzwecke nutzbares Temperaturniveau anheben. Durch diesen Effekt können mit derartigen Wärmepumpen deutlich höhere primärenergetische Nutzungsgrade erreicht werden als mit konventioneller Heiztechnik.

Alle Bauteile eines Moduls einer Sorptionswärmepumpe, wie Ad- bzw. Desorber, Verdampfer, bzw. Kondensator sind in einem einzigen vakuumdichten Behälter angeordnet. Dabei ist es wesentlich, den Verdampfer/Kondensator möglichst kompakt zu bauen und dabei eine große Verdampfungsoberfläche sicherzustellen.

Ziel der Erfindung ist es, ein Verfahren der eingangs erwähnten Art vorzuschlagen, das eine einfache Herstellung eines Verdampfers/Kondensators ermöglicht.

Erfindungsgemäß wird dies bei einem Verfahren der eingangs erwähnten Art durch die kennzeichnenden Merkmale des Anspruches 1 erreicht.

Durch die vorgeschlagenen Maßnahmen ergibt sich eine sehr einfache und problemlose Herstellung. Außerdem ist ein sehr guter Wärmeübergang von dem im Inneren des durch die Doppelnaht bestimmten Raumes strömenden Mediums zu den Blechplatten sichergestellt.

Durch die Merkmale des Anspruches 2 gelingt es, Verdampfer/Kondensatoren für größere Leistungen sehr kompakt aufzubauen.

Ein weiteres Ziel der Erfindung ist es, einen Verdampfer/Kondensator herzustellen, der sich durch eine hohe Dichte der Strömungswege des strömenden Mediums auszeichnet.

Erfindungsgemäß wird dies durch die Merkmale des Anspruches 3 erreicht. Auf diese Weise wird auch erreicht, daß das im von der Doppelnaht begrenzten Raum strömenden Medium in verschiedenen Richtungen strömt und daher der Wärmeübergang zwischen diesem Medium und dem Adsorbat weiter verbessert wird.

Durch die Merkmale des Anspruches 4 ergibt sich der Vorteil, daß die einzelnen die Doppelnähte aufweisenden Blechplatten relativ dicht übereinander gepackt werden können, wodurch ein sehr inniger Wärmeaustausch erreicht werden kann.

Die Erfindung wird nun anhand der Zeichnung näher erläutert. Dabei zeigen:
Fig. 1 schematisch einen erfindungsgemäßen Sorptions-Wärmepumpenmodul,
Fig. 2 eine Draufsicht auf Blechplatten mit Doppelnähten,
Fig. 3 einen Teilschnitt durch die Blechplatten gemäß Fig. 2,
Fig. 4 eine Draufsicht auf eine weitere Ausführungsform von Blechplatten mit Doppelnaht,
Fig. 5 einen Teilschnitt durch die Blechplatten gemäß der Fig. 4 und
Fig. 6 einen Teilschnitt durch einen mehrflächigen Verdampfer.

Gleiche Bezugszeichen bedeuten in allen Figuren gleiche Einzelteile.

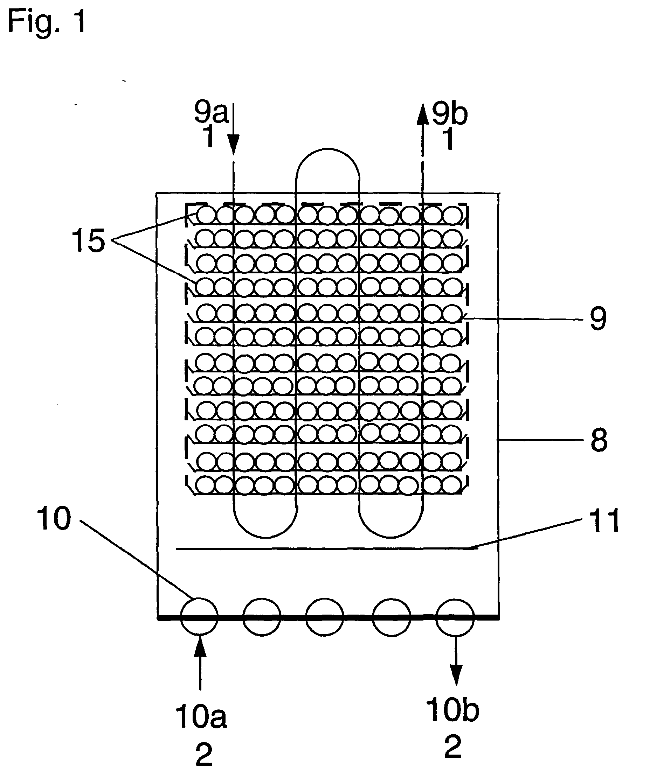

Ein Sorptions-Wärmepumpenmodul nach der Fig. 1 weist einen Ad-, bzw. Desorber 9 und einen Verdampfer bzw. Kondensator 10 auf, die in einem einzigen vakuumdichten Behälter 8 angeordnet sind, wobei der Verdampfer gleichzeitig als Wandung des Vakuumbehälters 8 fungiert. Dabei ist auf den Ad-/Desorber 9 der Adsorbens 15 aufgebracht. Während der Desorptionsphase wird dem Ad-/Desorber über einen Anschluß 9a ein heißer Wärmeträger 1 zugeführt. Dadurch wird das im Adsorbens gespeicherte Adsorbat verdampft.

Der dabei entstehende Dampf strömt je nach Ausführung eines Strahlungsschutzes 11 an diesem vorbei und bzw. oder gegebenenfalls durch kleine Löcher im Strahlungsschutz 11 durch diesen hindurch und wird auf einem Verdampfer 10, dessen Aufbau noch später erläutert werden wird, kondensiert.

Die dabei frei werdende Kondensationswärme wird von dem über den Anschluß 10a zufließenden warmen Wärmeträger 2 aufgenommen und über den Anschluß 10b zu einem Verbraucher transportiert.

Nachdem der Adsorbens eine maximale Temperatur erreicht hat, wird die Zufuhr von heißem Wärmeträger 1 unterbrochen.

Das gesamte Modul wird im Folgenden abgekühlt. In der folgenden Adsorptionsphase wird das auf dem Verdampfer 10 gespeicherte flüssige Adsorbat durch Zufuhr von kaltem Wärmeträger 2 verdampft.

Das dampfförmige Adsorbat strömt am Strahlungsschutz 11 vorbei und/oder gegebenenfalls durch diesen hindurch und wird vom Adsorbens 15 adsorbiert.

Die dabei freiwerdende Adsorptionswärme wird vom warmen Wärmeträger 1 aufgenommen und zu einem Verbraucher transportiert.

Nachdem der Adsorbens eine minimale Temperatur erreicht hat, wird das Modul durch Zufuhr des heißen Wärmeträgers 1 wieder aufgeheizt und der Prozeß beginnt von neuem.

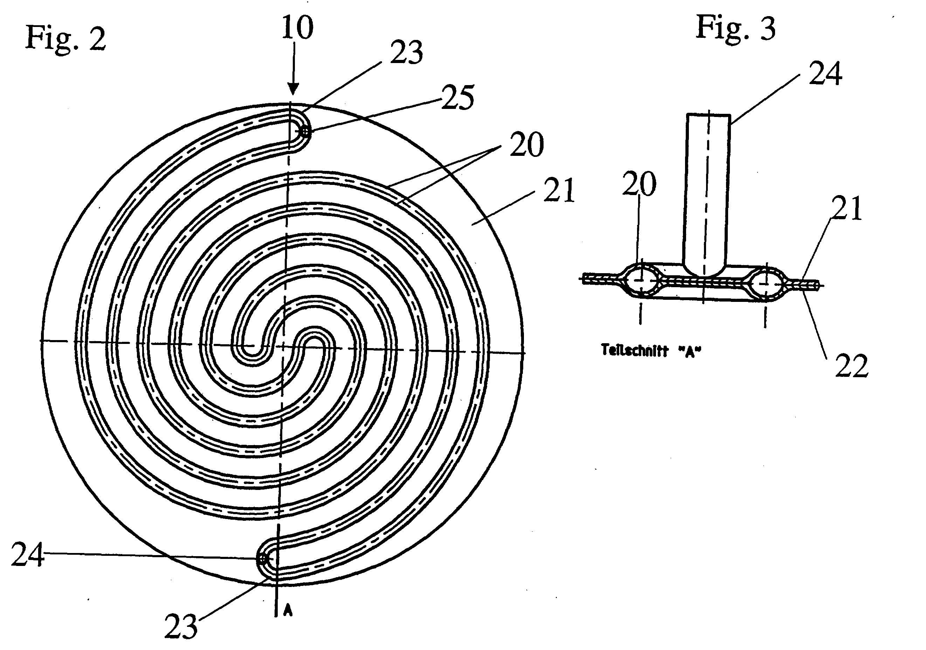

Wie aus den Fig. 2 und 3 zu ersehen ist, weist ein Verdampfer/Kondensator 10 zwei miteinander über eine dichte Doppelnaht 20 verbundene Blechplatten 21, 22 auf. Dabei ist der von der Doppelnaht 20 begrenzte Raum aufgeweitet und dient zur Führung eines Mediums.

Bei der in der Fig. 2 dargestellten Ausführungsform ist die Doppelnaht 20 in sich geschlossen. Dabei sind an zwei Stellen 180° Bögen vorgesehen, wobei die über diese Bögen 23 verbundenen Abschnitte im wesentlichen mäanderförmig verlaufen. Im Bereich der Bögen 23 sind Anschlüsse 24, 25 vorgesehen. Dadurch ist es möglich, das Medium in einander entgegengesetzten Richtungen durch die beiden Abschnitte der Doppelnaht 20, die durch die Bögen 23 miteinander verbunden sind, zu führen, wodurch sich ein besserer Wärmeaustausch ergibt.

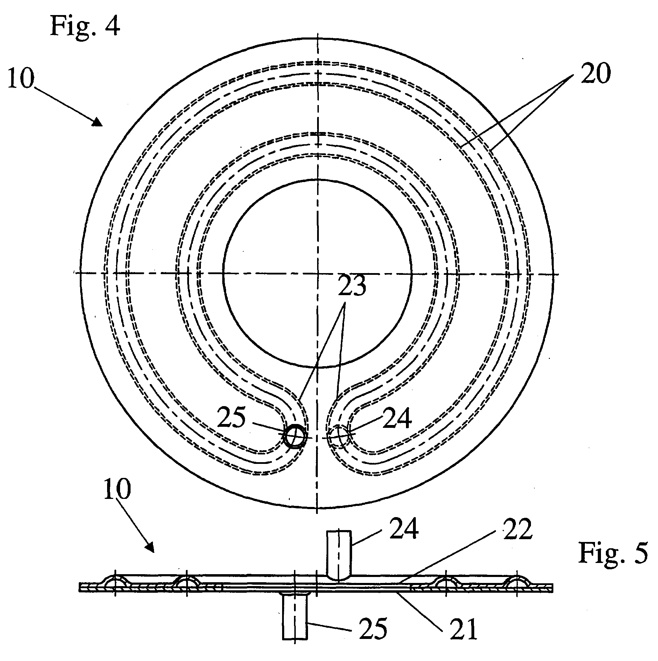

Bei der Ausführungsform nach den Fig. 4 und 5 sind ebenfalls zwei Blechplatten 21, 22 über eine dichte Doppelnaht 20 miteinander verbunden. Dabei ist die Doppelnaht 20 ebenfalls in sich geschlossen ausgeführt, wobei die zwei Bögen 23 der Doppelnaht 20 zwei, allerdings ungleich lange, im wesentlichen konzentrisch angeordnete Abschnitte miteinander verbinden, die in geringem Abstand voneinander verlaufen. Auch bei dieser Ausführungsform sind im Bereich der Bögen 23 Anschlüsse 24, 25 vorgesehen.

Zum Unterschied zur Ausführungsform nach den Fig. 2 und 3 ist der von der Doppelnaht 20 begrenzte Raum von einer ebenen Blechplatte 21 und der zwischen der Doppelnaht 20 aufgewölbten Blechplatte 22 begrenzt.

Zur Herstellung eines Verdampfer/Kondensators 10 nach den Fig. 2 bis 5 werden zwei Blechplatten 21, 22 mittels einer dichten Doppelnaht 20 miteinander verschweißt und die Anschlüsse 24, 25 angebracht, wobei der Verlauf der Doppelnaht in weiten Grenzen variiert werden kann. Anschließend wird der von der Doppelnaht 20 begrenzte Raum mittels Druckluft, die über die Anschlüsse 24, 25 zugeführt wird, aufgeweitet.

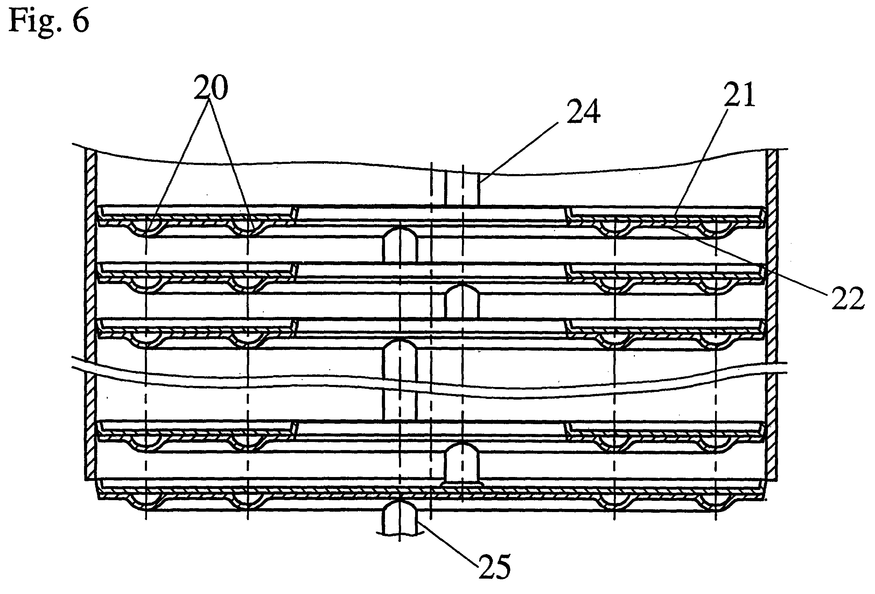

Wie aus der Fig. 6 zu ersehen ist, können mehrere über Doppelnähte 20 miteinander verbundene Paare von Blechplatten 21, 22 über deren Anschlüsse 24, 25 miteinander verbunden sein, wobei diese Paare von Blechplatten 21, 22 übereinander angeordnet sind.

## Patentansprüche

1. Verfahren zur Herstellung eines Verdampfer/Kondensators, insbesondere für eine Sorptionswärmepumpe, **dadurch gekennzeichnet,** daß zwei Blechplatten (21, 22) entlang eines vorgegebenen Weges mit einer dichten Doppelnaht (20) miteinander verschweißt und der zwischen der Doppelnaht (20) verbleibende Raum mit Anschlüssen versehen wird, wonach der zwischen der Doppelnaht (20) verbleibende Raum mit Druckluft aufgeweitet wird.

2. Verfahren nach Anspruch 1, **dadurch gekennzeichnet,** daß die Anschlüsse (24, 25) mehrerer verschweißter Blechplatten (21, 22) miteinander verbunden und übereinander angeordnet werden.

3. Verdampfer/Kondensator, hergestellt nach dem Verfahren nach Anspruch 1 oder 2, **dadurch gekennzeichnet,** daß der durch die Doppelnaht (20) gebildete Raum in sich geschlossen ist und in Form eines Mäanders verläuft, wobei im wesentlichen an zwei entlang des Weges der Doppelnaht (20) gleich weit voneinander entfernten Punkten Anschlüsse (24, 25) vorgesehen sind.

4. Verdampfer/Kondensator, hergestellt nach dem Verfahren nach Anspruch 1 oder 2, **dadurch gekennzeichnet,** daß eine (21) der beiden Blechplatten (21, 22) im wesentlichen eben ist und die zweite Blechplatte (22) zwischen den beiden Nähten der Doppelnaht (20) aufgewölbt ist.
